**Europäisches Patentamt**

**European Patent Office**

**Office européen des brevets**

(19)

(11) Veröffentlichungsnummer : **0 355 467 B1**

(12) # EUROPÄISCHE PATENTSCHRIFT

(45) Veröffentlichungstag der Patentschrift :
27.12.91 Patentblatt 91/52

(51) Int. Cl.⁵ : **A61C 17/06**

(21) Anmeldenummer : 89113889.3

(22) Anmeldetag : 27.07.89

(54) **Zahnärztliche Absaugeinrichtung mit Mitteln zur Saugkraftsteuerung.**

(30) Priorität : 10.08.88 DE 3827176

(43) Veröffentlichungstag der Anmeldung :
28.02.90 Patentblatt 90/09

(45) Bekanntmachung des Hinweises auf die
Patenterteilung :
27.12.91 Patentblatt 91/52

(84) Benannte Vertragsstaaten :
DE FR IT SE

(56) Entgegenhaltungen :
DE-A- 2 038 975
US-A- 3 763 862

(73) Patentinhaber : SIEMENS
AKTIENGESELLSCHAFT
Wittelsbacherplatz 2
W-8000 München 2 (DE)

(72) Erfinder : Kratochwilla, Hans-Michael
Ziegelhüttenstrasse 6
W-6143 Lorsch (DE)

EP 0 355 467 B1

Jouve, 18, rue Saint-Denis, 75001 PARIS

## Beschreibung

Die Erfindung bezieht sich auf eine zahnärztliche Absaugeinrichtung mit Mitteln zur Saugkraftsteuerung, enthaltend ein in der Saugleitung zwischen Unterdruckerzeuger und Sauginstrument angeordnetes Hauptsteuerventil, dessen Schließkörper pneumatisch beaufschlagbar ist und so von einer den Durchflußquerschnitt verschließenden bis öffnenden Stellung verstellbar ist, und ein elektromagnetisch betätigbares Vorsteuerventil, bei dessen Aktivierung der Schließkörper des Hauptsteuerventils verstellt wird.

Die Steuerung der Saugkraft bei Absaugvorrichtungen wird bisher auf unterschiedliche Weise realisiert. So ist es bekannt, am Sauginstrument ein mechanisches Schiebeventil zur Begrenzung des Saugstromes vorzusehen. Der Nachteil eines solchen Schiebeventils ist darin zu sehen, daß durch die Reduzierung des Strömungsquerschnittes unmittelbar im Bereich der Ansaugstelle eine strömungsungünstige Drosselung entsteht, wodurch sich eine erhöhte Strömungsgeschwindigkeit an der Drosselstelle einstellt, die zu einer relativ großen Geräuschbelästigung und auch zu einer unter Umständen sehr unangenehmen Unterkühlung des unmittelbaren Absaugbereiches (Mundhöhle) führt. Ein weiterer Nachteil liegt darin, daß sich an der Schiebermechanik relativ rasch Ablagerungen festsetzen können. Ein weiteres Problem ist das Festsaugen des Instruments an der Absaugstelle, also im Rachenraum des Patienten, das auch mit kleiner eingestelltem Saugquerschnitt nicht vermieden wird.

Des weiteren ist eine Absaugeinrichtung bekannt (GB-11 66 670), bei der das Sauginstrument ein Hauptsteuerventil in Form einer pneumatisch gesteuerten Membran enthält, welche einen Steuerraum begrenzt, der über einen Steuerkanal mit der Atmosphäre und bei manuellem Verschluß der zur Atmosphäre führenden Öffnung über einen weiteren Steuerkanal mit der Saugleitung und damit mit Unterdruck verbindbar ist. Das Hauptsteuerventil kann so pneumatisch geöffnet oder geschlossen werden. Nachteilig bei dieser Anordnung ist, daß das Sauginstrument insgesamt relativ unhandlich wird. Ein weiterer Nachteil ist darin zu sehen, daß bei geschlossenem Hauptsteuerventil der volle Unterdruck in der Saugleitung vorhanden ist, wodurch die Gefahr besteht, daß der üblicherweise als Spiralschlauch ausgebildete Saugschlauch sich zusammenzieht und durch eine solche Verkürzung der Schlauchlänge eine unangenehme Zugkraft auf das Sauginstrument ausgeübt wird.

Bei einer anderen bekannten Ausführung (US-3763862), bei der sowohl das Hauptsteuerventil als auch das Vorsteuerventil im Gerät, also extern des Instruments, angeordnet ist, ist es nachteilig, daß in der Schlauchverbindung zwischen Instrument und Gerät ein Steuerluftkanal vorgesehen werden muß.

Der im Anspruch 1 angegebenen Erfindung liegt die Aufgabe zugrunde, demgegenüber eine Verbesserung zu schaffen und insbesondere eine Möglichkeit anzugeben, mit der die Saugkraft gesteuert werden kann, ohne daß es zu unangenehmen Geräuschentwicklungen infolge ungünstiger Strömungsverhältnisse am Sauginstrument, oder zu unerwünschten Unterkühlungen kommen kann. Die Absaugvorrichtung soll insbesondere für sogenannte zentrale Absaugeinrichtungen verwendbar sein, bei denen mehrere Arbeitsplätze mit jeweils ein oder mehreren Sauginstrumenten von einer einzigen zentralen Saugmaschine aus versorgt werden, wobei entsprechend den Arbeitsgegebenheiten an den verschiedenen Arbeitsplätzen eine unterschiedlich große Saugleistung benötigt wird.

Dadurch, daß gemäß der Erfindung das Vorsteuerventil oder ein zusätzliches den Schließkörper des Hauptsteuerventils beeinflussendes, elektromagnetisch betätigbares Belüftungsventil intermittierend angesteuert werden, läßt sich bei entsprechend vorgesehenem Tastverhältnis eine kontinuierliche Regelung des Volumenstromes erzielen. Die intermittierende Ansteuerung erfolgt vorteilhafterweise mittels pulsierender Gleichspannung in einer Frequenz, die zwischen 0,5 und 1000 Hz liegt. Das Hauptsteuerventil ist vorteilhafterweise als Membranventil ausgebildet, wobei die Membran eine Ventilsteuerkammer begrenzt, die über das Vorsteuerventil oder das Belüftungsventil entsprechend dem gewählten Tastverhältnis mit mehr oder weniger Atmosphärenluft beaufschlagt wird.

Durch das intermittierende Steuern der Ventile stellt sich ein leichtes Pulsieren des Saugstromes bei reduzierter Saugleistung ein, was den Vorteil hat, daß das Ansaugen des Instrumentes im Behandlungsbereich (Mundhöhle) während der Schließzeit des Ventiles abgeschwächt ist, wodurch ein Festsaugen des Instruments weitgehend vermieden wird. Das intermittierende Steuern kann vorteilhafterweise mit wechselnder Frequenz erfolgen, indem die Ventile zunächst mit höherer Frequenz, z.B. über 20 Hz, und in bestimmten Zeitabständen (z.B. nach etwa 1 bis 2 sec) kurzzeitig (z.B. für wenige Millisekunden) mit einer demgegenüber niedrigeren Frequenz (z.B. < 10 Hz) angesteuert werden. Die Frequenzen können mit Vorteil auch so variiert werden, daß abwechselnd mit höherer Frequenz und mit kontinuierlich geregeltem Saugstrom und mit niedrigerer Frequenz pulsierend gearbeitet wird.

Weitere Vorteile ergeben sich aus den Unteransprüchen sowie aus der nachfolgenden Beschreibung eines Ausführungsbeispieles. Es zeigen:

Figur 1 einen Auszug aus einem hydraulisch-pneumatischen Schaltplan eines zahnärztlichen Gerätes,

Figur 2 Einzelheiten zur Steuerung der Saugkraft bei einem Sauginstrument.

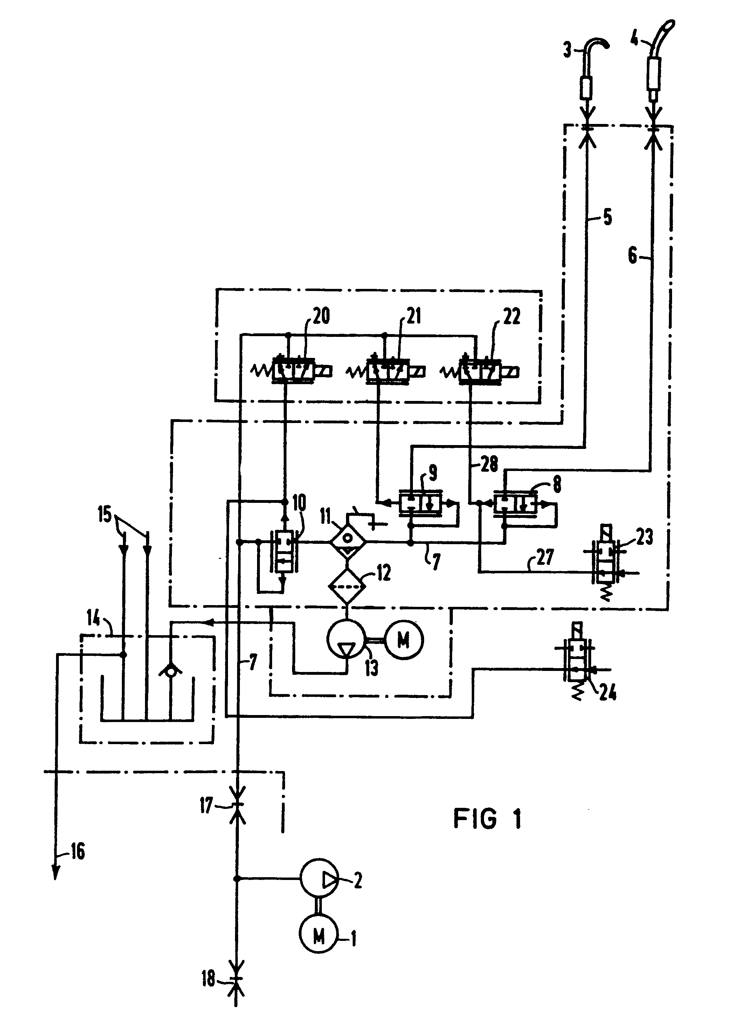

Die Figur 1 zeigt einen Auszug aus einem hydraulisch pneumatischen Schaltplan für ein zahnärztliches Gerät, wobei dieser Auszug lediglich die zur Absaugung erforderlichen Bauteile enthält. Diese Bauteile, die im Schaltplan symbolisch dargestellt sind, sind hinsichtlich Aufbau und Wirkungsweise hinlänglich bekannt, so daß darauf verzichtet werden kann, diese im einzelnen näher zu erläutern.

Ein von einem Motor 1 angetriebener Unterdruckerzeuger 2 ist so bemessen, daß an den mit 3 und 4 bezeichneten Sauginstrumenten eine entsprechend große Saugleistung in bezug auf Unterdruck und Saugvolumen zur Verfügung steht. Zwischen Unterdruckerzeuger 2 und den Sauginstrumenten 3 und 4 sind in den zugehörigen Saugleitungen 5 bis 7 Hauptsteuerventile 8 bis 10 angeordnet. Das Hauptsteuerventil 10 ist als sogenannter Platzwähler ausgebildet, mit dem der Arbeitsplatz, der die zwei Sauginstrumente 3, 4 enthält, vorbereitend an Unterdruck geschaltet werden kann, während die Hauptsteuerventile 8 und 9 für die direkte Absperrung bzw. Öffnung der zu den einzelnen Sauginstrumenten 3, 4 führenden Leitungen 5, 6 vorgesehen sind. Mit 11 ist ein Separierbehälter bezeichnet, mit 12 ein Grobteilfilter und mit 13 eine motorisch angetriebene Pumpe, die die im Separierbehälter 11 von der Saugluft getrennten Teile in einen allgemein mit 14 bezeichneten Feststoffsammler einbringt. In den Feststoffsammler 14 werden über weitere Leitungen diverse andere Abwasser eingeleitet, die letztlich über eine Abwasserleitung 16 dem Abwassernetz zugeführt werden. Mit 17 und 18 sind Anschlußstellen bezeichnet, an die der Arbeitsplatz an den Unterdruckerzeuger angeschlossen werden kann. Die mit 18 bezeichnete Anschlußstelle ist für den Anschluß eines zweiten Arbeitsplatzes, der ähnlich aufgebaut sein kann, wie beschrieben, vorgesehen.

Mit 20, 21 und 22 sind Vorsteuerventile bezeichnet, mit denen die Hauptsteuerventile 8 bis 10 angesteuert werden können, wobei mit den Vorsteuerventilen 21 und 22 die Saugkraft an den Sauginstrumenten 3 und 4 individuell verändert werden kann. Mit 23 und 24 sind zusätzliche Belüftungsventile bezeichnet, die als sogenannte Nachrüstventile vorgesehen sind, um die nachfolgend näher erläuterte erfindungsgemäße Saugkraftsteuerung auch bei bereits vorhandenen Anlagen, wie bisher beschrieben, einsetzen zu können. Die Vorsteuerventile 20 bis 22 und die Belüftungsventile 23, 24 können entweder als 2-Stellungsventile (Auf/Zu) oder - wie gezeichnet - als Analogventile, bei denen der Plunger gegenüber dem Ventilsitz kontinuierlich verstellt werden kann, ausgebildet sein.

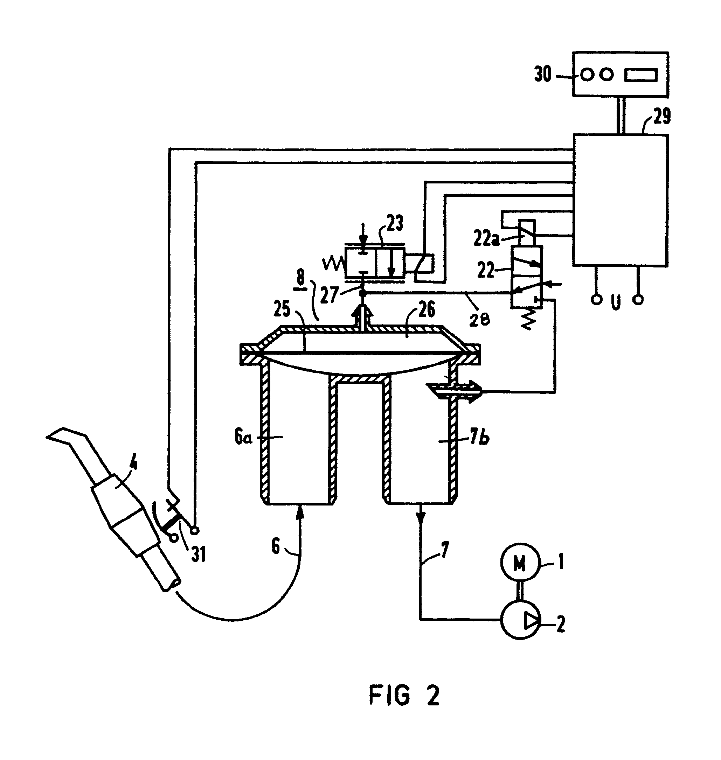

Anhand der Figur 2 wird die erfindungsgemäß vorgesehene Saugkraftsteuerung näher erläutert, und zwar am Beispiel des Sauginstruments 4. Das Hauptsteuerventil 8 ist hier im Schnitt dargestellt ; es handelt sich um ein sogenanntes Membranventil, bei dem eine Membran 25 zwischen Eingang 6a und Ausgang 7b der Saugleitung angeordnet ist und die einen Steuerraum 26 begrenzt, der über Leitungen 27, 28 mit dem Vorsteuerventil 22 und dem zusätzlichen Belüftungsventil 23 verbunden ist, wobei in der gezeichneten Schaltstellung das Belüftungsventil 23 gesperrt, dagegen das Vorsteuerventil 22 mit der Atmosphäre verbunden ist, was bedeutet, daß, wenn die Sauganlage eingeschaltet ist, die Verbindung der Leitungen 6, 7 zunächst unterbrochen ist. Wird sodann das Vorsteuerventil 22 aktiviert, wird über den sich in der Steuerkammer 26 aufbauenden Unterdruck die Membrane 25 vom Ventilsitz abgehoben, wodurch die Leitungen 6, 7 miteinander verbunden werden. Je nachdem, welche Zwischenstellung die Membran einnimmt, stellt sich ein kleinerer oder größerer Durchflußquerschnitt und damit ein kleineres oder größeres durchströmendes Volumen ein.

Erfindungsgemäß kann die Steuerung der Saugkraft reguliert werden, indem das Vorsteuerventil 22 intermittierend angesteuert wird. Hierzu wird an die Spule 22a des Magnetventiles eine pulsierende Gleichspannung mit begrenztem Strom angelegt. Abhängig vom Tastverhältnis, d.h. dem Verhältnis der Einschaltdauer zur Pause, läßt sich der Saugstrom und damit der Unterdruck in einem weiten Bereich steuern. Durch kürzeres oder längeres Offenhalten des Belüftungsweges am Vorsteuerventil 22 wird die Steuerkammer 26 des Hauptsteuerventils 8 mit mehr oder weniger Atmosphärenluft beaufschlagt. Je höher der Druck an der Oberseite der Membrane ist, desto mehr wird die Membrane die Leitungswege 6, 7 verschließen und damit die Durchflußmenge eingrenzen. Da außerdem die Membrane stets ein Druckgleichgewicht zwischen der oberen und unteren Hauptventilkammer herstellt, wird, unabhängig von verschiedenen Drosselquerschnitten des Systems, der Druck und damit die Durchflußmenge verstellt.

Das intermittierende Ein- und Ausschalten erfolgt mittels einer Steuerelektronik 29, die die Ventile mit einer Frequenz zwischen 0,5 und 1000 Hz schaltet. Gute Ergebnisse haben sich bei einer Frequenz zwischen 20 und 25 Hz gezeigt. Das dabei auftretende leichte Pulsieren des Saugstromes bei einer reduzierten Saugleistung wird als Vorteil angesehen, weil dadurch das Festsaugen des Sauginstruments 4 in der Mundhöhle während des Betriebes weitgehend vermieden bzw. insofern abgeschwächt wird, als während der Schließzeit des Vorsteuermagnetventils 22 das Sauginstrument sich sehr leicht vom festgesaugten Zustand befreien läßt.

Der Steuerstrom für die Spule 22a des Vorstellventils 22 kann von bereits in den Geräten vorhandenen Elektronikversorgungen gebildet werden, die ihrerseits hauptsächlich zur Steuerung von anderen Programmen, z.B. von Stuhl- oder Geräteprogrammen, benötigt werden.

Mit der Steuerelektronik ist eine Eingabetastatur 30 gekoppelt, über die es möglich ist, für die Handstücke 3, 4 und/oder für verschiedene Behandlungsvorgänge unterschiedliche Saugleistungen vorzuprogrammieren, die dann bei Entnahme des betreffenden Instruments über einen Schalter 31 oder auch durch Betätigen entsprechender Programmtasten abgerufen werden.

Besonders vorteilhaft ist es, wenn das Vorsteuerventil 22 als Ventil mit veränderbarem Querschnitt ausgebildet ist, indem z.B. der mit dem Magneten 22a verstellbare Plunger mit zunehmendem Verstellweg einen immer größer oder kleiner werdenden Entlüftungsquerschnitt freigibt. Ein solches, als 3/2-Wegeventil ausgeführtes Vorsteuerventil stellt also in Abhängigkeit von der Stellung des Plungers ein bestimmtes Unterdruckniveau an der der Oberseite (Steuerkammer 26) der Membran 25 des Hauptsteuerventils ein. Entsprechend diesem eingestellten Druckniveau wird sich auch das Unterdruckniveau in der Saugleitung 6 einstellen.

Ein solches, mit veränderbarem Querschnitt getaktetes Vorsteuerventil vorzusehen hat den Vorteil, daß eine äußerst geringe Geräuschentwicklung am Ventil selbst vorhanden ist, da der Magnetventilplunger jede Zwischenstellung einnehmen kann und nicht ständig zwischen zwei Endlagen schwingt, wie bei einer Ausführung, bei der der Plunger zwischen einer geöffneten und Schließstellung verstellt wird. Ein weiterer Vorteil ist in der höheren Lebensdauererwartung des Magnetventiles zu sehen.

Davon ausgehend, daß in bereits vorhandene Absauganlagen ein Hauptsteuerventil und ein Vorsteuerventil bereits vorhanden sind und dieses Vorsteuerventil nicht ohne weiteres getaktet werden kann, besteht alternativ die Möglichkeit, durch ein zusätzliches Belüftungsventil, wie in Figuren 1 und 2 mit 23 und 24 bezeichnet, ebenfalls eine Reduzierung der Saugmenge zu erreichen. Bei diesem Ventil handelt es sich um ein 2/2-Wegeventil, das als Bypaß, wie er in Figur 2 gezeichnet, geschaltet werden kann. Auch bei diesem Ventil wird der Magnet über die Steuerelektronik 29 getaktet, wodurch die Steuerkammer 26 je nach eingestelltem Tastverhältnis mit mehr oder weniger Atmosphärenluft beaufschlagt werden kann. Auch hier ist es besonders vorteilhaft, ein Belüftungsventil zu verwenden, dessen Belüftungsquerschnitt sich in Abhängigkeit von der Plungerstellung verändern läßt, so daß mit zunehmendem Belüftungsquerschnitt der Luftdruck an der Oberseite der Membran verstärkt werden kann, wodurch sich die Membran im Sinne einer Durchflußquerschnittsverringerung in der Saugleitung 6 einstellt. Auch bei dieser Lösung erfolgt die Membranverstellung ausschließlich druckabhängig, so daß eine Funktion auch bei unterschiedlichen Sauginstrumenten oder auch beim Festsaugen der Sauginstrumente gegeben ist.

**Patentansprüche**

1. Zahnärztliche Absaugeinrichtung mit Mitteln zur Saugkraftsteuerung, enthaltend ein in der Saugleitung (5, 6, 7) zwischen Unterdruckerzeuger (2) und Sauginstrument (3, 4) angeordnetes Hauptsteuerventil (8 bis 10), dessen Schließkörper (25) pneumatisch beaufschlagbar ist und so von einer den Durchflußquerschnitt verschließenden bis öffnenden Stellung verstellbar ist und ein elektromagnetisch betätigbares Vorsteuerventil (20 bis 22), bei dessen Aktivierung der Schließkörper (25) des Hauptsteuerventils (8 bis 10) angesteuert wird, **dadurch gekennzeichnet,** daß das Vorsteuerventil (20 bis 22) oder ein zusätzliches, den Schließkörper (25) des Hauptsteuerventils (8 bis 10) beeinflussendes, elektromagnetisches Belüftungsventil (23, 24) intermittierend angesteuert werden.

2. Absaugeinrichtung nach Anspruch 1, **dadurch gekennzeichnet,** daß die Ansteuerung der Ventile (20 bis 22 ; 23, 24) mit pulsierender Gleichspannung in einer Frequenz erfolgt, die bei Änderung des Tastverhältnisses eine kontinuierliche Änderung des Volumenstromes der Saugluft ermöglicht.

3. Absaugeinrichtung nach Anspruch 1, **dadurch gekennzeichnet,** daß das Vorsteuerventil (20 bis 22) als im Öffnungsquerschnitt veränderbares Entlüftungsventil ausgebildet ist.

4. Absaugeinrichtung nach Anspruch 1 oder 2, **dadurch gekennzeichnet,** daß das Vorsteuerventil (20 bis 22) nicht intermittierend, dagegen das zusätzlich vorgesehene Belüftungsventil (23, 24) intermittierend angesteuert wird.

5. Absaugeinrichtung nach einem der Ansprüche 1 bis 4, **dadurch gekennzeichnet,** daß der Schließkörper (25) des Hauptsteuerventils (8 bis 10) eine Membrane ist, die einen Ventilsteuerraum (26) begrenzt, der über Leitung (27, 28) mit den Entlüftungskanälen des Vorsteuerventils (20 bis 22) und-/oder des zusätzlichen Belüftungsventils (23, 24) verbunden ist.

6. Absaugeinrichtung nach einem der Ansprüche 1 bis 5, **dadurch gekennzeichnet,** daß das Vorsteuerventil (20 bis 22) mit einer Frequenz von 0,5 bis 50 Hz, vorzugsweise mit 20 Hz, getaktet wird.

7. Absaugeinrichtung nach Anspruch 6, **dadurch gekennzeichnet,** daß das Vorsteuerventil (20 bis 22) als 3/2-Wegeventil ausgebildet ist.

8. Absaugeinrichtung nach einem der Ansprüche 1 bis 5, **dadurch gekennzeichnet,** daß das Vorsteuerventil (20 bis 22) oder das zusätzliche Belüftungsventil (23, 24) mit einer Frequenz zwischen 500 und 1000 Hz, vorzugsweise mit 750 Hz, getaktet wird.

9. Absaugeinrichtung nach einem der Ansprüche 1 bis 8, **dadurch gekennzeichnet,** daß zur Ansteuerung der Ventile (20 bis 22 ; 23, 24) eine gemeinsame Steuerelektronik (29) vorgesehen ist.

10. Absaugeinrichtung nach Anspruch 9, **dadurch gekennzeichnet,** daß mit der Steuerelektronik eine Eingabetastatur (30) gekoppelt ist, mit der für die Sauginstrumente (3, 4) und/oder für verschiedene Behandlungsvorgänge unterschiedliche Saugkrafteinstellungen voreingestellt werden können.

11. Absaugeinrichtung nach einem der Ansprüche 1 bis 10, **dadurch gekennzeichnet,** daß die Ventile (20 bis 22 ; 23, 24) mit wechselnder Frequenz angesteuert werden.

## Claims

1. Dental suction device with means for suction power control, containing a main control valve (8 to 10) arranged in the suction line (5, 6, 7) between vacuum generator (2) and suction instrument (3, 4), the closing body (25) of the main control valve being capable of being loaded pneumatically and therefore being adjustable from a position closing the cross section of passage to a position opening it, and an electromagnetically operable pilot valve (20 to 22), with the activation of which the closing body (25) of the main control valve (8 to 10) is controlled, characterized in that the pilot valve (20 to 22) or an additional electromagnetic ventilation valve (23, 24), influencing the closing body (25) of the main control valve (8 to 10), is controlled intermittently.

2. Suction device according to claim 1, characterized in that the control of the valves (20 to 22 ; 23, 24) takes place with pulsating direct voltage in a frequency which enables a continuous change of the volumetric flow of the suction air as the on-off ratio changes.

3. Suction device according to claim 1, characterized in that the pilot valve (20 to 22) is constructed as vent valve which is variable in the opening cross section.

4. Suction device according to claim 1 or 2, characterized in that the pilot valve (20 to 22) is not controlled intermittently, although the additionally provided ventilation valve (23, 24) is controlled intermittently.

5. Suction device according to one of claims 1 to 4, characterized in that the closing body (25) of the main control valve (8 to 10) is a membrane which limits a valve control space (26) which is connected by means of line (27, 28) to the vent ducts of the pilot valve (20 to 22) and/or of the additional ventilation valve (23, 24).

6. Suction device according to one of claims 1 to 5, characterized in that the pilot valve (20 to 22) is clocked with a frequency of 0.5 to 50 Hz, preferably with 20 Hz.

7. Suction device according to claim 6, characterized in that the pilot valve (20 to 22) is constructed as 3/2-way valve.

8. Suction device according to one of claims 1 to 5, characterized in that the pilot valve (20 to 22) or the additional ventilation valve (23, 24) is clocked with a frequency between 500 and 1000 Hz, preferably with 750 Hz.

9. Suction device according to one of claims 1 to 8, characterized in that for the control of the valves (20 to 22 ; 23, 24) common control electronics (29) are provided.

10. Suction device according to claim 9, characterized in that there is coupled to the control electronics an input keyboard (30), with which for the suction instruments (3, 4) and/or for various treatment processes various suction power settings can be preset.

11. Suction device according to one of claims 1 to 10, characterized in that the valves (20 to 22 ; 23, 24) are controlled with alternating frequency.

## Revendications

1. Dispositif d'aspiration dentaire comportant des moyens pour commander la force d'aspiration et comportant une soupape de commande principale (8 à 10), qui est disposée dans la canalisation d'aspiration (5, 6, 7) entre un générateur de dépression (2) et un instrument d'aspiration (3, 4) et dont l'organe de fermeture (25) peut être chargé pneumatiquement et de ce fait est déplaçable depuis une position fermant la section transversale de passage jusqu'à une position ouvrant cette section, et une soupape de commande et une soupape pilote (20 à 22) pouvant être actionnées de façon électromagnétique et lors de l'activation de laquelle le corps de fermeture (25) de la soupape de commande principale (8 à 10) est commandée, caractérisé par le fait que la soupape pilote (20 à 22) ou une soupape électromagnétique supplémentaire d'aération (23, 24), qui agit sur le corps de fermeture (25) de la soupape de commande principale (8 à 10), est commandée de façon intermittente.

2. Dispositif d'aspiration suivant la revendication 1, caractérisé par le fait que la commande des soupapes (20 à 22 ; 23, 24) est réalisée au moyen d'une tension continue pulsatoire avec une fréquence permettant, dans le cas d'une modification du taux d'impulsions, une modification continue du débit volumique de l'air d'aspiration.

3. Dispositif d'aspiration suivant la revendication 1, caractérisé par le fait que la soupape pilote (20 à 22) est réalisée sous la forme d'une soupape de désaération, dont la section transversale d'ouverture est modifiable.

4. Dispositif d'aspiration suivant la revendication 1 ou 2, caractérisé par le fait que la soupape pilote (20 à 22) est commandée d'une manière non intermittente, tandis que la soupape d'aération (23, 24) prévue en supplément est commandée de façon intermittente.

5. Dispositif d'aspiration suivant l'une des revendications 1 à 4, caractérisé par le fait que le corps de fermeture (25) de la soupape de commande principale (8 à 10) est une membrane, qui limite un espace de commande (26) de la soupape, qui est raccordé par l'intermédiaire de la canalisation (27, 28) au canaux de désaération de la soupape pilote (20 à 22) et/ou de la soupape supplémentaire d'aération (23, 24).

6. Dispositif d'aspiration suivant l'une des revendications 1 à 5, caractérisé par le fait que la soupape pilote (20 à 22) est commandée de façon cadencée à une fréquence comprise entre 0,5 et 50 Hz, et est de préférence égale à 20 Hz.

7. Dispositif d'aspiration suivant la revendication 6, caractérisé par le fait que la soupape pilote (20, 22) est réalisée sous la forme d'une soupape à trois/deux voies.

8. Dispositif d'aspiration suivant l'une des revendications 1 à 5, caractérisé par le fait que la soupape amont (20 à 22) ou la soupape supplémentaire d'aération (23, 24) est commandée de façon cadencée à une fréquence comprise entre 500 et 1000 Hz et de préférence égale à 750 Hz.

9. Dispositif d'aspiration suivant l'une des revendications 1 à 8, caractérisé par le fait qu'un système électronique commun de commande (29) est prévu pour la commande des soupapes (20, 22 ; 23, 24).

10. Dispositif d'aspiration suivant la revendication 9, caractérisé par le fait qu'au système électronique de commande est couplé un clavier d'entrée (30), qui permet de réaliser les réglages préalables de la force d'aspiration, qui diffèrent pour les instruments d'aspiration (3, 4) et/ou pour différentes opérations de traitement.

11. Dispositif d'aspiration suivant l'une des revendications 1 à 10, caractérisé par le fait que les soupapes (20 à 22 ; 23, 24) sont commandées avec une fréquence alternative.

FIG 1

FIG 2